# EUROPEAN PATENT APPLICATION

(11) **EP 4 643 633 A1**
(43) Date of publication of application: **05.11.2025**
(21) Application number: 25173002.4
(22) Date of filing: 28.04.2025
(51) Int. Cl.: A01D 43/10, A01D 82/00

(54) **METHOD FOR CALCULATING ROLL GAP BASED ON ROLL PRESSURE POSITION SENSOR**

(30) Priority: 29.04.2024 US 202418649414
(71) Applicant: CNH Industrial America LLC, New Holland, PA 17557 (US)
(72) Inventor: Fay II, Jeffrey, New Holland, 17557 (US)
(74) Representative: CNH Industrial IP Department

(57) **Abstract**

A method for determining a zero roll gap condition in an agricultural machine, including: operating first and second roll-gap mechanisms to move a second conditioning roll towards a first conditioning roll until a position sensor indicates that a tensioner biasing the second roll towards the first roll has stopped moving; operating the first roll-gap mechanism in a gap-opening direction until the position sensor indicates that the tensioner moved; operating the first roll-gap mechanism in a gap-closing direction along a closing distance; operating the second roll-gap mechanism in the gap-opening direction until the position sensor indicates that the tension mechanism has moved; operating the second roll-gap mechanism in the gap-closing direction along a closing distance; and setting the current position of the tensioner, as measured by the position sensor, as a zero roll gap condition. An agricultural machine and a computer-readable medium for performing the method are also provided.

## Description

### FIELD OF THE INVENTION

The present invention pertains to agricultural equipment, such as roll-type conditioners and the like for mowers and harvesting machines.

### BACKGROUND OF THE INVENTION

Agricultural harvesting machines may include self-propelled windrowers or pull-type mower conditioners. Farmers may operate such mowing devices to cut crop material, such as hay or grass, from a field and subsequently deposit the cut crop into windrows on the field. The windrows may be left on the field to dry out the crop in the sun. Thereafter, farmers may bale the cut crop material with a baler, such as a large square baler or round baler, which straddles the windrows and travels along the windrows to pick up the crop material and form it into bales.

A conditioner assembly of a self-propelled windrower or pull-type mower conditioner typically includes two or more conditioning rolls for conditioning the crop material. The conditioning rolls are located adjacent to one another such that a gap can be formed therebetween. This gap helps to define the size of the crop mat that passes therethrough. As the crop passes through the gap, the conditioning rolls apply opposing tangential forces that condition or otherwise crush the crop material. The extent of conditioning is based in part on the size of the gap and the tension holding the conditioning rolls in place. Thus, it can be desirable to provide means for adjusting the size of the gap and the tension applied to the conditioning rolls to account for crop conditions and the desired operating results. In addition, such adjustability can be desirable to correct for wear on the surfaces of the conditioning rolls. As can be appreciated, suboptimal conditioning caused by an incorrect or poorly controlled gap setting may negatively impact the drying time of the cut crop, tonnage, and/or feed quality.

Current conditioning assemblies often require an operator to manually set the gap size and tension of the conditioning rolls. The gap size can be set by adjusting a nut on a limiting rod coupled to one of the conditioning rolls. The tension can be set by turning a crank that variably biases one conditioning roll toward the other conditioner roll. However, it may be difficult for the operator to manually adjust these parameters, especially if certain components have become corroded or stuck due to crop buildup. Also, such adjustments may not be able to be accurately verified because the operator may not be able to visually inspect the gap size or roll tension. As such, the manual adjustment of the conditioning rolls can be difficult, time-consuming, and potentially inaccurate.

Automated gap-setting systems also have been proposed. An example of an automated system is shown in U.S. Pat. No. 11,950,537, which is incorporated herein by reference for all purposes. Automated systems are desirable to provide crop conditioners that automatically adjust the roller gap upon turning on the machine, or via controls from the operator station through a user interface such as a monitor. However, the inventors have determined that automated systems can potentially suffer from deficiencies that limit their effectiveness and utility.

While various roll gap adjustment systems are known, the inventor has determined that the state of the art can still be advanced.

### BRIEF SUMMARY OF THE INVENTION

In a first exemplary aspect, there is provided a method for determining a zero roll gap condition in an agricultural machine comprising a frame, a first conditioning roll rotatably supported on the frame, a second conditioning roll rotatably and movably supported on the frame, a tension mechanism, a first roll-gap mechanism at a first end of the second conditioning roll, a second roll-gap mechanism at a second end of the second conditioning roll, and a position sensor configured to determine a position of the tension mechanism relative to the frame. The method includes: operating the first roll-gap mechanism and the second roll-gap mechanism in a gap-closing direction to move the second conditioning roll towards the first conditioning roll until the position sensor indicates that the tension mechanism has stopped moving relative to the frame; operating the first roll-gap mechanism in a gap-opening direction until the position sensor indicates that the tension mechanism has started moving relative to the frame; operating the first roll-gap mechanism in the gap-closing direction along a respective closing distance; operating the second roll-gap mechanism in the gap-opening direction until the position sensor indicates that the tension mechanism has started moving relative to the frame; operating the second roll-gap mechanism in the gap-closing direction along a respective closing distance; and setting the current position of the tension mechanism relative to the frame, as measured by the position sensor, as a zero roll gap condition.

In a second exemplary aspect, there is provided an agricultural machine comprising: a frame; a first conditioning roll rotatably supported on the frame; a second conditioning roll rotatably and movably supported on the frame; a tension mechanism; a first roll-gap mechanism at a first end of the second conditioning roll; a second roll-gap mechanism at a second end of the second conditioning roll; a position sensor configured to determine a position of the tension mechanism relative to the frame; and a controller operatively connected to the tension mechanism, the first roll-gap mechanism, the second roll-gap mechanism and the position sensor. The controller comprises a processor and a memory storing non-transient computer executable instructions, and wherein the controller is operative, upon reading and executing the instructions, to: operate the first roll-gap mechanism and the second roll-gap mechanism in a gap-closing direction to move the second conditioning roll towards the first conditioning roll until the position sensor indicates that the tension mechanism has stopped moving relative to the frame; operate the first roll-gap mechanism in a gap-opening direction until the position sensor indicates that the tension mechanism has started moving relative to the frame; operate the first roll-gap mechanism in the gap-closing direction along a respective closing distance; operate the second roll-gap mechanism in the gap-opening direction until the position sensor indicates that the tension mechanism has started moving relative to the frame; operate the second roll-gap mechanism in the gap-closing direction along a respective closing distance; and set the current position of the tension mechanism relative to the frame, as measured by the position sensor, as a zero roll gap condition.

In a third exemplary aspect, there is provided a computer readable medium storing non-transient computer executable instructions that, when executed by a computer, perform a method for determining a zero roll gap condition in an agricultural machine comprising a frame, a first conditioning roll rotatably supported on the frame, a second conditioning roll rotatably and movably supported on the frame, a tension mechanism, a first roll-gap mechanism at a first end of the second conditioning roll, a second roll-gap mechanism at a second end of the second conditioning roll, and a position sensor configured to determine a position of the tension mechanism relative to the frame. The method comprises: operating the first roll-gap mechanism and the second roll-gap mechanism in a gap-closing direction to move the second conditioning roll towards the first conditioning roll until the position sensor indicates that the tension mechanism has stopped moving relative to the frame; operating the first roll-gap mechanism in a gap-opening direction until the position sensor indicates that the tension mechanism has started moving relative to the frame; operating the first roll-gap mechanism in the gap-closing direction along a respective closing distance; operating the second roll-gap mechanism in the gap-opening direction until the position sensor indicates that the tension mechanism has started moving relative to the frame; operating the second roll-gap mechanism in the gap-closing direction along a respective closing distance; and setting the current position of the tension mechanism relative to the frame, as measured by the position sensor, as a zero roll gap condition.

### BRIEF DESCRIPTION OF THE SEVERAL VIEWS OF THE DRAWINGS

For the purpose of illustration, there are shown in the drawings certain embodiments of the present invention. It should be understood, however, that the invention is not limited to the precise arrangements, dimensions, and instruments shown. Like numerals indicate like elements throughout the drawings. In the drawings:
FIG. 1 schematically illustrates an exemplary embodiment of a header for an agricultural harvester, the header including a crop conditioning device, in accordance with an exemplary embodiment.
FIG. 2 is a perspective view of a crop conditioning device that can be used with the header of FIG. 1.
FIG. 3 is a perspective view of the crop conditioning device of FIGS. 1-2 without the subframe.
FIG. 4 is a perspective view of the crop conditioning device of FIGS. 1-3, wherein the tension mechanism is applying roll tension on the conditioning rolls.
FIG. 5 is a perspective view of the crop conditioning device of FIGS. 1-4 , wherein the upper conditioning roll is in a maximum float or open position as created by, for example, a crop mat passing between the conditioning rolls.
FIG. 6 is a flow chart of a method for operating the crop conditioning device, in accordance with an exemplary embodiment.
FIGS. 7 and 8 are perspective details view of an alternative embodiment of a roll-gap mechanism in accordance with an exemplary embodiment.
FIGS. 9 and 10 are perspective details view of an alternative embodiment of a tension mechanism in accordance with an exemplary embodiment.

### DETAILED DESCRIPTION OF THE INVENTION

The terms "forward", "rearward", "left" and "right", when used in connection with the agricultural machine and/or components thereof are usually determined with reference to the direction of forward operative travel of a vehicle towing the machine, or a self-propelled vehicle incorporating the machine, but they should not be construed as limiting. The term "longitudinal" refers to the forward travel direction. The term "transverse" and "lateral" refer to a direction perpendicular to the forward travel direction and generally parallel to the ground surface when the machine is in operation. The terms "downstream" and "upstream" are determined with reference to the intended direction of crop material flow during operation, with "downstream" being analogous to "rearward" and "upstream" being analogous to "forward." The term "agricultural harvesting machine" may refer to any desired machine that cuts crop material from a field, such as a self-propelled windrower or a mower conditioner. The term "crop conditioning device" may refer to a roll-type conditioner that is usable in a self-propelled windrower, a pull-type mower conditioner, or any other desired machine. The term "operational setting" may include any desired adjustable variable of the header and/or conditioner, including the rotational speed of the conditioning rolls, the conditioning roll gap size, the tension force on the conditioning rolls, the position of the swath forming shields of the exit gate, the cutter bar speed, the cutter bar height, the cutter bar angle, and/or the windrow merger status. The term "operational roll gap" may refer to the roll gap during operation of the crop conditioning device, wherein the roll gap naturally fluctuates due to variations in the crop mat passing in between the conditioning rolls. The operation of the crop conditioning device may include an operation wherein the crop conditioning device and/or the conditioning rolls are stationary, wherein the header is raised, and/or wherein the crop conditioning device is presently moving with the conditioning rolls actively rotating. The term "initial" as used herein to describe the various settings may refer to a first or subsequent setting upon which other settings may be adjusted relative thereto.

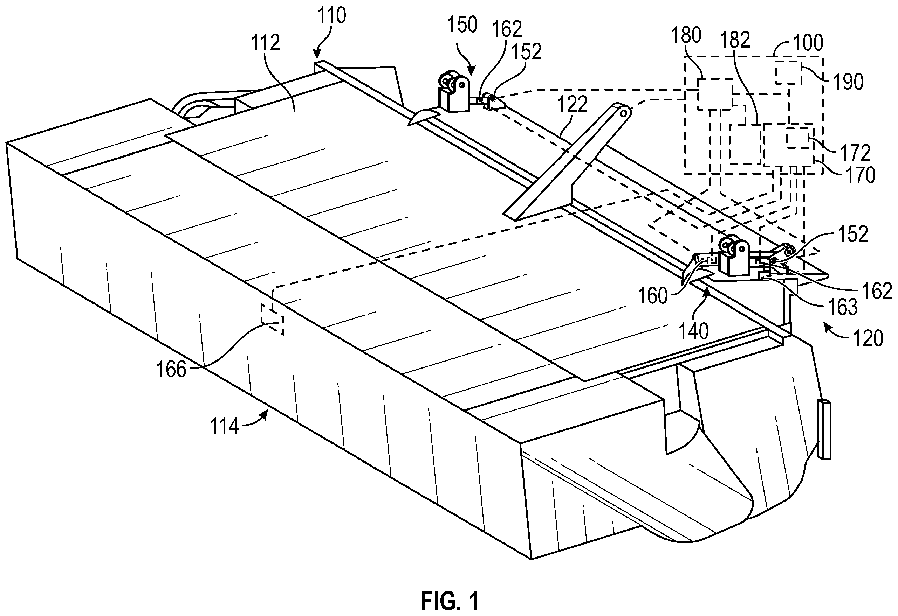

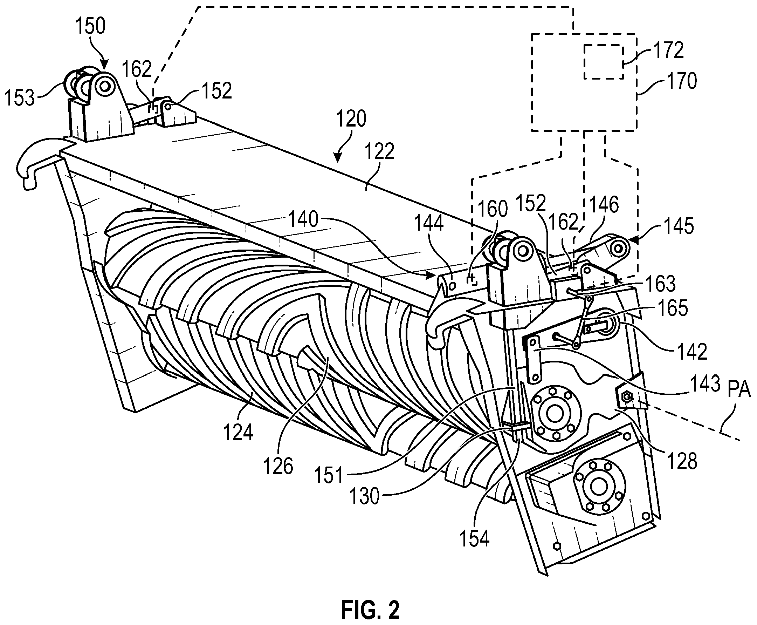

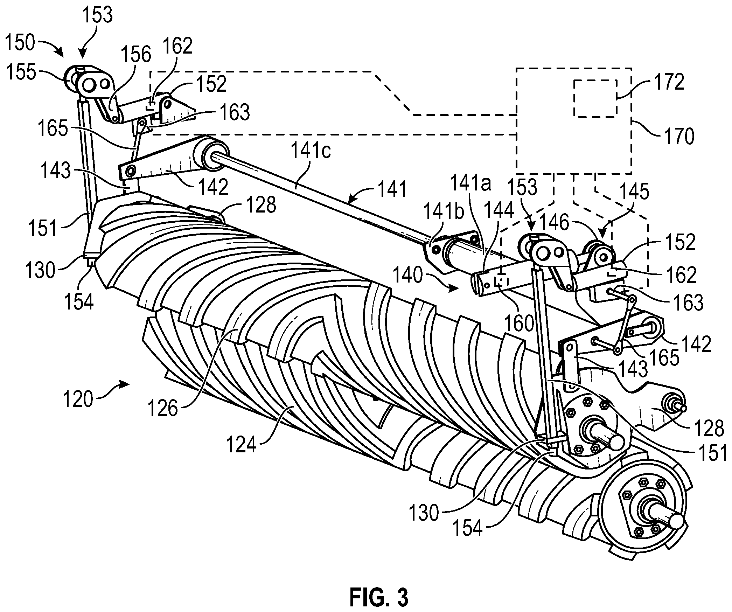

Referring now to the drawings, and more particularly to FIGS. 1-5, there is schematically shown an agricultural harvester 100 that generally includes a chassis, a prime mover, wheels and/or tracks, a cab for housing the operator, and a header 110 supported by the chassis. The agricultural harvester 100 may be in the form of any desired agricultural vehicle, such as a self-propelled windrower.

The header 110 is configured and operated to cut the crop from the field, condition the crop material, and deposit the conditioned crop material back onto the field in a windrow or swath. The header 110 generally includes a main frame 112, a cutter bar 114, a crop conditioning device 120, and an exit gate with swath forming shields.

The cutter bar 114 cuts the crop from the field. The cutter bar 114 may be located at the front of the main frame 112, and may be in the form of any desired cutting mechanism, such as a sickle bar or rotary disc cutter bar. For example, cutter bar 114 may be in the form of a rotary disc cutter bar with multiple cutting disc heads.

The crop conditioning device 120 may condition or otherwise crush the crop material for the purpose of, for example, decrease the drying time of the crop material on the field or preparing the crop material for later collection and/or processing. The crop conditioning device 120 may be located rearwardly, i.e., downstream, of the cutter bar 114. The crop conditioning device 120 generally includes a subframe 122, at least two conditioning rolls including a lower conditioning roll 124 and an upper conditioning roll 126 connected to the subframe 122. A tension mechanism 140 is provided to adjust a biasing force with which the upper conditioning roll 126 is driven towards the lower conditioning roll 124 (i.e., in a gap-closing direction). Respective a roll-gap mechanisms 150 are located at each end of the upper conditioning roll 126 to control a minimum roll gap RG distance between the lower and upper conditioning rolls 124, 126. The crop conditioning device 120 may also include one or more sensors 160, 161, 162, 163, such as described below, and a controller 170 that can be used to perform various analytical and operational functions, such as automatically setting and/or adjust the tension force on the conditioning roll 126 and the roll gap RG. It should be appreciated that the crop conditioning device 120 may be incorporated into any desired agricultural harvesting machine, such as the header 110 or a pull-type mower conditioner.

The subframe 122 may be connected to the main frame 112. The subframe 122 mounts the conditioning rolls 124, 126. The subframe 122 may comprise one or more sheet metal panels, including a top panel and lateral side panels. The subframe 122 may comprise any desired material or materials, and it may be a monolithic or a multicomponent frame. It will be appreciated that the subframe 122 may instead be the header main frame 112 depending on the overall construction of the crop conditioning device 120, and this substitution generally is applicable to embodiments. In particular, except as otherwise explicitly stated or clearly required, both the terms and the structures of the subframe 122 and main frame 112 are interchangeable. For example, any part that is attached to a subframe 122 can be considered to be attached to a main frame 112, and vice versa. As another example, if an embodiment does not have a discernible subframe 122, then the term subframe 122 refers to a main frame 112.

The at least two conditioning rolls 124, 126 may rotate in opposite directions for guiding a mat of crop material through the roll gap RG. The lower conditioning roll 124 may be rotatably connected to the subframe 122, and may be connected to the subframe 122 at a fixed rotation axis defined by bearings, axles or the like. In some cases, however, the rotation axis of the lower conditioning roll 124 may be movable relative to the subframe 122. The upper conditioning roll 126 may be rotatably and movably or pivotally connected to the subframe 122. In other words, the upper conditioning roll 126 may rotate relative to the subframe 122 about its axis of rotation, and the upper conditioning roll 126 may also move or pivot such that that its axis of rotation moves towards and away from the rotation axis of the lower conditioning roll 124 in order to adjust the size of the roll gap RG. Thus, the upper conditioning roll 126 is movable relative to the lower conditioning roll 124. As can be appreciated, the lateral distance between the surfaces of the lower and upper conditioning rolls 124, 126 defines the size of the roll gap RG.

Each lateral end of the upper conditioning roll 126 has an end bracket 128 that movably mounts the upper conditioning roll 126 to the subframe 122, for example at a pivot axis PA defined by a bolt, shaft, or the like. Each end bracket 128 also includes a one-way slider coupling 130 for operably connecting the upper conditioning roll 126 to the roll-gap mechanism 150. It should be appreciated that the lower conditioning roll 124 may be movable instead of or in addition to the upper conditioning roll 126.

The tension mechanism 140 generally includes a tension member 141, and a respective tension arm 142 and drop link 143 at each end of the upper conditioning roll 126. The tension mechanism 140 further includes a tension actuator 144 operably connected to the tension member 141 by a tensioner linkage 145, and one or more biasing members that provide a resilient force-reacting pathway between the ends of the upper conditioning roll 126 and the tension actuator, such as described below. The tension mechanism 140 sets and adjusts the tension force on the upper conditioning roll 126.

The tension member 141 is operably connected to the upper conditioning roll 126 by way of the tension arms 142 and drop links 143. The tension member 141 may be located above the upper conditioning roll 126, and may be substantially parallel to the upper conditioning roll 126. The tension member 141 may be in the form of one or more of a tension or torsion tube, a helical spring, or the like. Alternatively, the tension member 141 may be in the form of any desired elongated member(s), such as a multi-section bar. In the shown example, the tension member 141 comprises a spring 141a such as or helical spring or a torque tube that is rigidly attached at one end of the spring 141a to the tensioner linkage 145, a coupling 141b that is rigidly connected to the other end of the spring 141a, and a shaft 141c that is rigidly connected to the coupling 141b. Where a helical torsion spring is used, it may be surrounded by a cover, as shown, to prevent crop material from interacting with the spring. Each end of the shaft 141c is rotationally fixed to a respective one of the tension arms 142, such as by a splined, hexagonal, or other non-circular geometric shaft end, or by welding or other construction. Each drop link 143 is pivotally connected at one end to a respective one of the tension arms 142, and at the other end to a respective one of the end brackets 128. By this arrangement, the tensioner linkage 145, tension member 141, and tension arms 142 are rotationally fixed to each other. Thus, the tension member 141 may be rotated by the tension actuator 144 for applying a desired tension or biasing force onto the upper conditioning roll 126, by way of the tension arms 142 acting on the drop links 143, and the drop links 143 acting on the end brackets 128. The shown example conveniently uses a single tension actuator 144 that distributes forces to both tension arms 142, but other embodiments may use more than one tension actuator 144.

It will be appreciated that one or more of the various parts of the tension member 141 can allow some degree of resilient motion to establish a spring or spring-like connection between the tension actuator 144 and the end brackets 128 that support the upper conditioning roll 126. In this case, the spring 141a can provide the greatest range of resilient motion, while the shaft 141c also contributes some degree or resilient motion. The tensioner linkage, tension arms 142 and drop links 143 typically provide relatively little resilient motion. Thus, the overall amount of spring-biasing force generated between the tension actuator 144 and the upper conditioning roll 126 is defined by a spring constant of the spring 141a and shaft 141c. Other embodiments can use other configurations of resilience-providing elements.

In some cases, the tension actuator 144 may be a double-acting mechanism that can apply force on the tensioner linkage 145 to alternately increase and decrease tension force on the upper conditioning roll 126. In some other cases, the tension actuator 144 may be single-acting mechanism that operates only to increase tension force on the upper conditioning roll 126, or to only decrease tension force on the upper conditioning roll 126. When configured as a single-acting mechanism a return spring may be provided to generate an opposing force. In any case, the tension mechanism 140 is configured to place the system into a maximum roll tension state in which the conditioning rolls 124, 126 are pushed together to generate a maximum tension value, and a minimum roll tension state in which the conditioning rolls 124, 126 are not pushed together, pushed together to generate only a minimum tension value, or are affirmatively pushed apart. The tension actuator 144 may be in the form of any desired actuator such as a linear actuator or rotary motor. For example, the tension actuator 144 may be in the form of a double-acting or single-acting hydraulic cylinder 144.

The tensioner linkage 145 converts a linear movement of the tension actuator 144 into a rotational movement for rotating the tension member 141. The tensioner linkage 145 may include one or more links 146. For instance, the tensioner linkage 145 may include a single link 146 that is pivotally connected to the tension actuator 144 at one end and rigidly connected to the tension member 141 at the other end. The link 146 may include an approximate "L"-shape. It should be appreciated that the one or more links 146 may comprise any desired linkage members and any desired material.

In the shown embodiment, the tension mechanism 140 is configured such that the actuator 144 is contracted to pull the tensioner linkage 145 forward, to thereby rotate the tension member 141, to thereby drive the tension arms 142 downward and generate a biasing force to drive the upper conditioning roll 126 towards the lower conditioning roll 124. The biasing force increases as the tension actuator 144 is contracted. It will be readily understood that this arrangement can be reconfigured to provide the same results, such as by configuring the tension actuator 144 to extend to generate an increasing biasing force.

Each roll-gap mechanism 150 generally includes a control rod 151 and a roll-gap actuator 152 that is operably connected to the control rod 151 via a roll-gap linkage 153. Each roll-gap mechanism 150 sets and adjusts the size of the roll gap RG at the respective end of the conditioning rolls 124, 126. The control rods 151 control the lowermost sliding position of the upper conditioning roll 126, but allow upper movement of the upper conditioning roll 126 against the bias of the tension mechanism 140. To this end, each control rod 151 extends vertically between the respective roll-gap linkage 153 and the respective end brackets 128. In this example, each control rod 151 is connected at its upper end by a pivot 155 to the respective roll-gap linkage 153, and is slidably connected at its lower end to the respective end bracket 128. The sliding connection is provided by configuring each control rod 151 to extends through an opening (or along a slot of) a respective slider coupling 130 provided on the end bracket 128. Furthermore, each control rod 151 has a travel stop 154 that engages with the bottom of the respective slider coupling 130 when the control rod 151 reaches a predetermined position with respect to the end bracket 128. The travel stop 154 may comprise, for example, a washer that is secured to the control rods 151 via a nut, a nut without a washer, an enlarged end of the control rod 151, a cross-pin installed in the control rod 151, and so on.

As will be appreciated from the foregoing, each travel stop 154 defines a mechanical stop for setting a bottom limit of travel of the upper conditioning roll 126 along the control rod 151. This provides a floating connection that allows the upper conditioning roll 126 to lift upwards away from the travel stop 154 against the biasing force of the tension mechanism 140, but prevents the upper conditioning roll 126 from moving below the limit set by the travel stop 154. Further, the control rods 151 can be moved by the roll-gap actuators 152 in a gap-closing direction to move the travel stops 154 down to allow the upper conditioning roll 126 to move towards the lower conditioning roll 124, and in a gap-opening direction to move the travel stops 154 upwards to move the upper conditioning roll 126 away from the lower conditioning roll 124. The control rods 151 may be in the form of any desired rods, bars, or links, and the travel stops 154 may be in the form of any desired members that are dimensioned or shaped to engage the slider couplings 130.

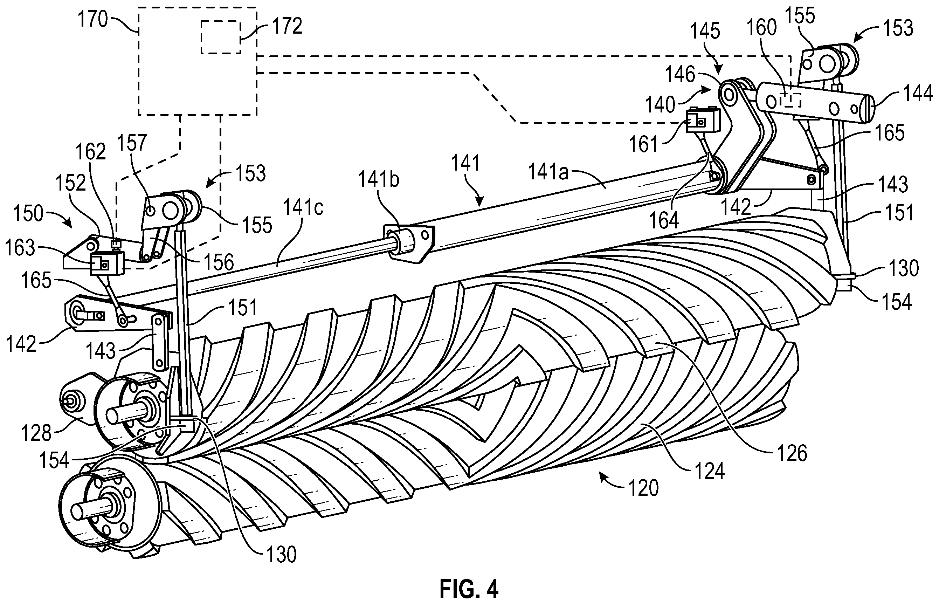

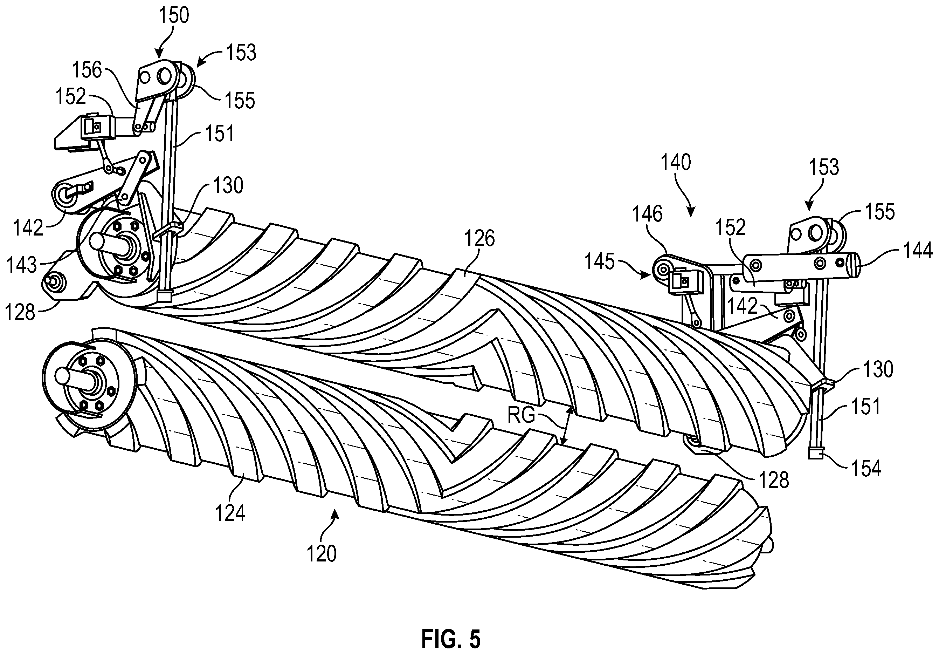

The roll-gap actuators 152 may pivot the upper conditioning roll 126 about its axis PA in order to adjust the roll gap RG. Thereby, the roll-gap actuators 152 may pivot the upper conditioning roll 126 in between a maximum roll gap size (FIG. 5) and a minimum roll gap size (FIG. 4). Each roll-gap actuator 152 is mounted at one end to the subframe 122 at the other end to the roll-gap linkage 153. The roll-gap actuators 152 and roll-gap linkages 153 may be located above, i.e., vertically upward of, the tension arms 142 and drop links 143, to provide a compact arrangement along the lateral direction. The roll-gap actuators 152 are independently movable for tilting the upper conditioning roll 126 in a non-parallel configuration relative to the lower conditioning roll 124. **In** other words, the roll-gap actuators 152 can set the roll gap RG to be at different positions on the left-hand side and the right-hand side of the conditioning rolls 124, 126. Thus, the roll-gap actuators 152 may accommodate an uneven wear on one or both of the conditioning rolls 124, 126, or to account for different crop conditions across the width of the crop conditioning device 120.

Each roll-gap actuator 152 may be in the form of any desired actuator, such as an electric or hydraulic linear actuator or an electric or hydraulic rotary motor. **In** this example, the roll-gap actuators 152 are hydraulic cylinders 152. Similarly, the roll-gap linkages 153 may have any suitable configuration. **In** this case, the roll-gap linkages 153 comprise rockers 156 that are supported on the subframe 122 by rocker pivots 157. Other force-transmitting arrangements (i.e., transmissions) between the roll-gap actuators 152 and the control rods 151 may be used in other cases. Such transmissions may comprise, for example, alternative linkages, gears or belts, screw drives, or a simple direct drive (e.g., the roll-gap actuator 152 may be oriented vertically and the control rod 151 may comprise a rigid extension of the hydraulic piston).

Suitable power supplies are provided to operate the tension actuator 144 and the roll-gap actuators 152. For example, if the actuators 144, 152 are configured as hydraulic cylinders 144, 152, the crop conditioning device 120 or the harvester 100 may further include a hydraulic system 180 to selectively control the extensions and retractions of the hydraulic cylinders 144, 152. Hence, the hydraulic system 180 can be fluidly connected to the actuators 144, 152 of the tension and roll-gap mechanisms 140, 150. The hydraulic system 180 also may be operably connected to the controller 170. The hydraulic system 180 may include one or more proportional valves, blocking valves, fluid reservoirs, such as drain tanks 182 and/or accumulators, and hydraulic lines. It should also be appreciated that the actuators 144, 152 shown herein, along with any component of the hydraulic system 180, may be reconfigured to increase the tension force or the roll gap size in a manner which is reverse to the aforementioned operation thereof depending upon the geometry of the agricultural harvesting machine.

The one or more sensors 160, 161, 162, 163 may include devices such as rotary or linear potentiometers operating as position sensors, hydraulic pressure sensors, strain gauges, and the like. In this example, one or more first sensors 160 may be provided to determine an operating state (e.g., operating force or extension length) of the tension actuator 144, one or more second sensors 161 may be provided to determine a position of the tensioner mechanism 140, one or more third sensors 162 may be provided to determine an operating state (e.g., operating force or extension length) of each roll-gap actuator 152, and one or more fourth sensors 163 may be provided to determine a position of each tension arm 142. Various types and uses of such sensors are described in U.S. Pat. No. 11,950,537, which is incorporated herein by reference.

While it is not strictly necessary to include each or any of the foregoing sensors, it is preferred for at least one sensor to be provided to determine a position of the tension member 141 relative to the subframe 122. This can be accomplished, for example by providing a first sensor 160 in the form of a linear potentiometer to determine a state of extension of the tension actuator 144, or providing a second sensor 161 in the form of a potentiometer interconnecting the subframe 122 and the tension member 141 or the tension linkage 145. In the shown example, the second sensor 161 comprises a rotary potentiometer mounted to the subframe 122, and linkage 164 connecting the rotary potentiometer to the tension member 141, to thereby detect when and by how much the tension member 141 rotates relative to the subframe 122. In particular, as the tension member 141 rotates, it pulls the linkage 164, and rotates the rotary potentiometer to change a resistance value. The resistance value is evaluated by the controller 170 to determine the rotation of the tension member 141 relative to the subframe 122.

The third sensors 162 may include, for example, position sensors located within each roll-gap actuator 152 to sense the position of the roll-gap actuator 152, and the fourth sensors 163 may include, for example, potentiometers operably connected from the subframe 122 to each tension arm 142 via a link 165 to measure the rotational movement of the tension arm 142.

The crop conditioning device 120 also may include one or more sensors 166 for detecting the type of crop material being harvested. As shown, the crop conditioning device 120 includes one crop detection sensor 166. This crop detection sensor 166 may also sense any desired characteristic of the crop material, such as the stem diameter of the crop material. The crop detection sensor 166 may be connected to the main frame 112 and operably connected to the controller 170. The crop detection sensor 166 may be in the form of any desired sensor, such as an optical sensor. It should be appreciated that the crop conditioning device 120 may or may not include a crop detection sensor 166.

The controller 170 is configured to receive signals from one or more of the sensors 160, 161, 162, 163, 166 and use the signals to determine operating parameters (e.g., the roll gap RG, an operating force generated by the tension actuator 144, etc.). To this end, the controller 170 may be operably connected to one or more of the tension actuator 144, the roll-gap actuators 152, and/or the sensors 160, 161, 162, 163, 166 via wired or wireless connections. The controller 170 may include a memory 172 for storing known operating parameters, lookup tables, algorithms for performing calculations based on the sensor data, controls for the actuators 144, 152, and so on. The controller 170 may be in the form of any desired controller, and may be a standalone controller or incorporated into the existing hardware and/or software of the harvester 100.

The controller 170 comprises a processor that is configured to operate and perform various processes and methods, such as those described herein. Such processes and methods may be performed by the controller 170 upon loading and executing software code or instructions that are tangibly stored in the memory 172. The memory 172 may comprise any suitable tangible computer readable medium, such as a magnetic medium, e.g., a computer hard drive, an optical medium, e.g., an optical disc, a solid-state memory, e.g., flash memory, or other storage media known in the art. Thus, any of the functionality performed by the controller 170 described herein is implemented in software code or instructions that are tangibly stored on a tangible computer readable medium. The controller 170 loads the software code or instructions via a direct interface with the computer readable medium or via a wired and/or wireless network. The controller 170 may be connected to a user interface 190, such as a monitor and keyboard, a touch screen display and/or one or more instruments or controls, as known in the art.

The terms "software code" and "code" used herein refer to any instructions or set of instructions that influence the operation of a computer or controller. They may exist in a computer-executable form, such as machine code, which is the set of instructions and data directly executed by a computer's central processing unit or by a controller, a human-understandable form, such as source code, which may be compiled in order to be executed by a computer's central processing unit or by a controller, or an intermediate form, such as object code, which is produced by a compiler. As used herein, the term "software code" or "code" also includes any human-understandable computer instructions or set of instructions, e.g., a script, that may be executed on the fly with the aid of an interpreter executed by a computer's central processing unit or by a controller.

The controller 170 may be programmed (i.e., provided with executable instructions) to conduct an initial set-up procedure of the crop conditioning device 120. For example, upon activation or upon receiving a user prompt, the controller 170 may determine one or more crop material characteristics via sensor input or user instructions. For example, using the user interface 190, the operator may select one or more crop material characteristics, i.e., the type, weight, stem diameter, and/or intended use (e.g., hay or silage) of the crop material. Additionally or alternatively, the controller 170 may receive the sensed type of crop material via the crop detection sensor 166, or select such characteristics based on the last operation. For instance, the controller 170 may compare the imagery captured by the crop detection sensor 166 to known crop characteristics stored in the memory 172 to determine the type of crop material. Thereafter, the controller 170 may retrieve stored data within the memory 172 that indicates relevant information concerning the crop material, such as known and averaged stem diameter of a particular type of crop material. The controller 170 may also receive the sensed stem diameter from the crop detection sensor 166. The controller 170 may also retrieve preloaded operational settings from the memory 172 that are keyed to the type of crop material. For example, the memory 172 may store the archetypal roll gap RG and tension force settings for a particular type of crop material. An archetypal roll gap may be considered a roll gap size which is approximately 40%, plus or minus 20%, of an average stem diameter. Additionally, for example, the memory 172 may store the operator's preferred roll gap RG and tension force settings for a particular type of crop material. Hence, after determining the type of crop material and the relevant characteristics associated therewith, the controller 170 may set the static, initial roll gap size and/or tension force from the data stored in the memory 172. For example, if the operator is harvesting heavy alfalfa and the pre-tested optimum roll gap size is 40% of the stem diameter and the optimum tension setting is 60% of the maximum tension available, the controller 170 may adjust the upper conditioner roll 126 to these preset settings so that mowing can commence without further action on behalf of the operator.

Furthermore, the controller 170 may also set the static, initial roll gap size and/or tension force depending upon one or more operational settings of the crop conditioning device 120, which may be inputted by the operator and/or sensed via one or more corresponding sensors. For example, the controller 170 may set the roll gap size and/or tension force depending upon a position of the swath forming shields of the exit gate, a cutter bar speed, a cutter bar height, a cutter bar angle, a conditioning roll speed, and/or a windrow merger status. For instance, the controller 170 may sense the position of the exit gate via a swath-gate-position sensor and accordingly set a corresponding roll gap size and tension force depending upon the sensed position of the exit gate. As can be appreciated, the position of the exit gate may be determinative of the intended use of the crop material. For instance, a narrow position of the swath forming shields, which forms a narrow swath, may indicate that the crop material will be used as silage. Also, for instance, a wide position of the swath forming shields, which forms a wide swath, may indicate that the crop material will be used as hay. Generally, crop material intended for sileage will have a higher roll gap RG and a lower tension force than crop material intended for hay. Thereby, the controller 170 may accordingly set the roll gap size and/or tension force depending upon the intended use of the crop material, as indicated by the position of the swath forming shields of the exit gate.

The controller 170 may also automatically adjust one or more operational settings. After the initial roll gap size and/or tension force have been set, the controller 170 may use the initial roll gap size and tension force as a starting point for subsequent adjustments. The controller 170 may automatically adjust the tension actuator 144 to set the tension force and the roll-gap actuators 152 to set the roll gap RG upon receiving a further input command from the operator and/or a signal from one or more of the sensors 160, 161, 162, 163. For example, during operation of the crop conditioning device 120, the controller 170 may optimize the conditioning performance by monitoring the operational roll gap and subsequently adjusting the tension force to maintain the desired operational roll gap. The controller 170 may monitor the roll gap size, via one or more of the sensors 160, 161, 162, 163, and calculate at least one roll-gap operational characteristic. For example, the controller 170 may calculate an average deviation and/or a standard deviation of the change in roll gap size as the upper conditioning roll 126 fluctuates up and down during normal operation due to variations in the crop mat. If the roll-gap standard deviation exceeds 50% of the stem diameter, the controller 170 may increase the tension force until the standard deviation falls below 50% and the average roll gap is less than the stem diameter. If the roll-gap standard deviation is low, for example 10-30% of the stem diameter, the controller 170 may decrease the tension force until the roll-gap standard deviation is approximately 50%, plus or minus 20%. Thus, the controller 170 can vary the tension force on the upper conditioning roll 126 to maintain a maximum average roll gap and keep a roll-gap standard deviation below a maximum roll-gap standard deviation to achieve an optimized conditioning quality.

It should be appreciated that the controller 170 may set and subsequently adjust the tension force and the roll gap RG of the tension and roll-gap mechanisms 140, 150 depending upon one or more crop material characteristic(s) and/or operational setting(s), which may be inputted by the operator and/or sensed via corresponding sensors. Hence, the controller 170 may set and subsequently adjust the tension force and roll gap RG depending upon the type, weight, stem diameter, and/or intended use of the crop material, the calculated roll-gap operational characteristic(s), the position of the swath forming shields of the exit gate, the cutter bar speed, the cutter bar height, the cutter bar angle, the conditioning roll speed, and/or the windrow merger status.

Additionally, the controller 170 may calibrate the tension mechanism 140 and the roll-gap mechanism 150. For instance, the controller 170 may perform a calibration procedure prior to, during, and/or after the operation of the crop conditioning device 120 in order to set the roll gap RG and tension on the conditioning rolls 124, 126. This calibration procedure may be performed as an initial calibration of the tension and roll-gap mechanisms 140, 150, prior to any wear on the conditioning rolls 124, 126. Additionally, this calibration procedure may be performed in order to compensate for wear on one or both of the conditioning rolls 124, 126. Furthermore, this calibration procedure may be performed to reset the tension and roll-gap mechanisms 140, 150 after replacing one or more parts of the crop conditioning device 120.

While some calibration processes are known (see, e.g., U.S. Pat. No. 11,950,537), the inventors have determined that such methods can suffer from vulnerability of sensor systems to rigorous operating conditions. For example, a position sensor for directly determining the position of the tension arm 142 or end bracket 128 is subject to damage caused by, for example, high-frequency movements of the upper conditioning roll 126. Thus, there is a need to better calculate a zero roll gap setting. Improving the accuracy of the initial zero roll gap setting can provide numerous operating benefits, such as allowing more reliable roll gap RG setting, at the outset (particularly when it is inconvenient or impossible to visually confirm or manually measure the current roll gap value), and during operation of the harvester 100.

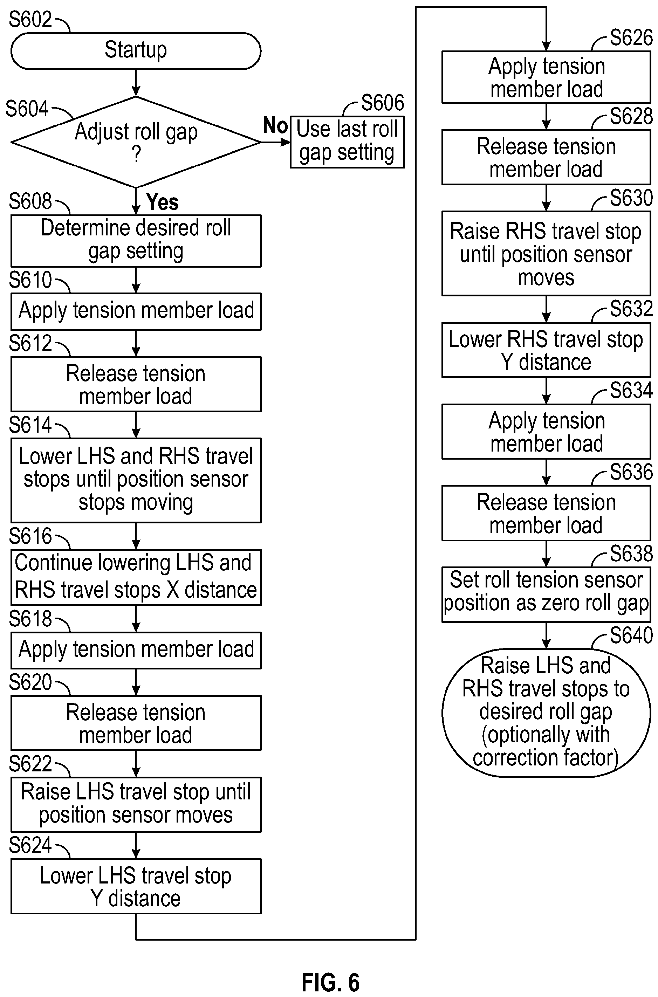

Referring now to FIG. 6, an example of a method including a calibration procedure is described in detail. This method can be used for any machine having conditioning rolls and the like, such as self-propelled windrower with a header or a pull-type mower conditioner. While the following description describes a series of processing steps, it will be understood that the method need not include all of the steps, or perform all of the steps in the described order, and the method may include additional steps not described herein.

The method preferably uses a position sensor, such as a position sensor 161 described above, to detect and/or measure movement of the tension mechanism 140 relative to the subframe 122 of the crop conditioning device 120 (as noted above, it will be appreciated that the subframe 122 may instead be the header main frame 112 depending on the overall construction of the crop conditioning device 120, and this substitution generally is applicable to embodiments). In particular, the sensor 161 may comprise a position sensor, such as a rotary or linear potentiometer that is fixed to the subframe 122 and joined to the tensioner spring 141a via a link 164. In other cases, the position sensor can be a contact sensor (e.g., closed circuit detection circuit, piezoelectric contact sensor, etc.), or a noncontact proximity or rotation sensor (e.g., an infrared or ultrasonic transmitter/receiver, a hall effect sensor, etc.). The position sensor 161 preferably is configured to measure relative motion between the subframe 122 and the tension mechanism 140, and optionally a portion of the tension mechanism 140 that is subject to relatively little or effectively no deformation throughout the tension mechanism's range of motion. For example, in the shown embodiment, the position sensor 161 is mounted to the subframe 122 and secured via the link 164 to the tensioner spring 141a at or near where the tensioner spring 141a rigidly (i.e., non-rotationally) connects to the tensioner linkage 145. In this case, the tensioner linkage 145 is a robust structure that deforms very little (essentially not at all) under loads applied by the tension actuator 144. Thus, the portion of the tensioner spring 141a to which the link 164 is connected will move essentially in unison with the tensioner linkage 145, and essentially in unison with the tension actuator 144. In other embodiments, the sensor 161 or link 164 may be connected directly or indirectly to the tensioner linkage 145, or to the tension actuator 144 itself. In any event, the sensor 161 position may be reversed, with the sensor 161 mounted on the tension mechanism 140 and connected via a link 164 to the subframe 122.

The method begins in step S602, in which the harvester 100 is started or otherwise activated in preparation for a harvesting operation. In step S604, it is determined, autonomously by the controller 170 or by manual decision-making whether it is necessary to adjust the roll gap RG. If adjustment is not necessary, then in step S606 the controller 170 defaults to the last-used roll gap setting and (if necessary) makes changes to associated operating parameters to achieve that setting. If it is desired to adjust the roll gap, then the method moves to step S608, in which the controller 170 and/or user determines a desired roll gap RG setting. The desired roll gap RG can be based on feedback from crop condition sensors 166, user input, manual selection via a user interface 190, or the like.

Next, the calibration process to zero the roll gap RG begins in step S610. In step S610, the controller 170 operates the tension actuator 144 to generate a load to bias the system towards, and more preferably entirely to, the maximum roll tension state. In the example of Figures 1-5, in which the tension actuator 144 comprises a telescopic piston and cylinder type hydraulic actuator, this can be achieved by applying hydraulic pressure (e.g., by opening or operating valves or other hydraulic equipment) to drive the tension actuator 144 towards the retracted position, and more preferably to the fully retracted position. This initial step is intended to take up some or all of the slack in the system that might be present due to worn parts or open tolerances.

Next, in step S612, the controller 170 operates the tension actuator 144 to release the biasing load, to thereby achieve an idle or low-force state in which the tension actuator 144 does not actively apply tension to the system, or applies only a nominal amount of tension. In the shown hydraulic actuator example, this can be achieved by opening a valve to vent the pressure side of the hydraulic cylinder to the drain tank 182, or otherwise reducing or eliminating the hydraulic pressure.

Next, in step S614, the controller 170 operates the left-hand and right-hand roll-gap mechanisms 150 to lower their respective travel stops 154, to thereby permit the upper conditioning roll 126 to move towards the lower conditioning roll 124. During this process, the controller 170 monitors the signal from the position sensor 161, and continues lowering the travel stops 154 until the position sensor 161 indicates that movement of the tensioner spring 141a relative to the subframe 122 has stopped.

At this point, it can be assumed that the upper conditioning roll 126 is resting on the lower conditioning roll 124 to achieve the minimum (i.e., "zero") roller gap RG position. In some cases, it can also be assumed that there is no slack in the system that might adversely affect the remainder of the calibration process. However, if it is expected that some result-affecting slack might remain in the system, or that parts may be held by friction such that the upper conditioning roll 126 has not, in fact, reached the true minimum roller gap RG position, steps S616 and S618 may be taken to help ensure that the upper conditioning roll 126 has reached the true minimum roller gap RG position.

In step S616, the controller 170 operates the left-hand and right-hand roll-gap mechanisms 150 to lower their respective travel stops 154 a predetermined initial closing distance X. The predetermined initial closing distance X may be determined via feedback measurement, or any other suitable means. For example, where the roll-gap actuator 152 is a hydraulic actuator, as shown in FIGS. 1-5, position sensors associated with the roll-gap mechanism 150 (e.g., sensor 163) can be used to measure the distance traveled by the travel stops 154. When these position sensors 163 indicate that the travel stops 154 have reached the predetermined initial closing distance X, the controller 170 stops lowering the travel stops 154. The initial closing distance X may be selected according to various criteria. For example, the initial closing distance X may be selected based on empirical evidence indicating likely distances by which the upper conditioning roll 126 might be held by friction away from the true minimum roller gap RG position, and/or empirical evidence indicating how much slack might remain in the system even after the upper conditioning roll 126 has reached the true minimum roller gap RG position. As another example, the initial closing distance X may be selected based on educated estimations or evaluating worst-case scenarios. The initial closing distance X also may comprise or include any predetermined correction factor or the like.

Next, in step S618, the controller 170 once again operates the tension mechanism 140 to apply a force to bias the system towards the maximum roll tension state, and thus bias the upper conditioning roll 126 towards the lower conditioning roll 124. The biasing force in this step may reach the maximum roll tension state, but it is expected that a significantly lower force can achieve the desired results. For example, where the tension actuator 144 is a hydraulic actuator, the hydraulic actuator may be retracted by 25% of its full stroke length. This action helps ensure that the upper conditioning roll 126 is at the true minimum roller gap RG position, and any slack remaining in the system is removed.

Following step S618, it once again can be assumed, but with higher confidence, that the conditioning roll 126 is at the true minimum roller gap RG position. **In** addition, it can be assumed that any slack in the system (which is likely for the purposes of any single calibration cycle to remain constant) is accounted for and will not affect the subsequent steps of the method.

In step S620, the controller 170 again releases the tension member load, such as by venting the tension actuator 144 hydraulic cylinder to a drain tank.

In step S622, the controller 170 operates one of the left-hand and right-hand roll-gap mechanisms 150 to raise the respective travel stop 154 until the position sensor 161 indicates that the tensioner spring 141a has moved relative to the subframe 122. In this example, the left-hand roll-gap mechanism 150 is operated in step S622. Once a predetermined amount of movement is detected, the controller 170 stops raising the left-hand travel stop 154. The predetermined amount of movement can be a fixed value, and may be the smallest detectible increment of the control system (i.e., the controller 170 stops raising the travel stop 154 immediately upon detecting any movement). At this point, it can be accurately assumed that the zero roll gap value for the left-hand side of the upper conditioning roll 126 has been achieved (if not slightly exceeded). Also at this point, the position of the left-hand roll-gap mechanism 150 may be detected using a position sensor (e.g., sensor 163), but this is not strictly required in all embodiments.

Next, in step S624, the controller 170 operates to lower the left-hand roll-gap mechanism 150 by a respective closing distance Y1, which thereby lowers the upper conditioning roll 126 back into contact with the lower conditioning roll. The movement along the closing distance Y1 can be determined via sensor feedback or other means.

Moving to step S626, the controller 170 operates the tension mechanism 140 to apply a force to bias the system towards the maximum roll tension state, and thus bias the upper conditioning roll 126 towards the lower conditioning roll 124. This action helps ensure that any slack remaining after completing step S624 is removed from the system. As with step S618, the biasing force in this step may reach the maximum roll tension state, but it is expected that a significantly lower force (e.g., 25% of maximum) can achieve the desired result of removing any remaining slack.

In step S628, the controller 170 again releases the tension member load, such as by venting the tension actuator 144 hydraulic cylinder to a drain tank.

In step S630, the controller 170 operates the other of the left-hand and right-hand roll-gap mechanisms 150 to raise the respective travel stop 154 until the position sensor 161 indicates that the tensioner spring 141a has moved relative to the subframe 122. In this example, the right-hand roll-gap mechanism 150 is operated in step S630. Once a predetermined amount of movement is detected, the controller 170 stops raising the right-hand travel stop 154. As before, the predetermined amount of movement can be selected according to any desirable criteria, such as the smallest detectible increment of the control system. At this point, it can be accurately assumed that the zero roll gap value for the right-hand side of the upper conditioning roll 126 has been achieved (if not slightly exceeded). Also at this point, the position of the right-hand roll-gap mechanism 150 may be detected using a position sensor (e.g., sensor 163), but this is not strictly required in all embodiments.

Next, in step S632, the controller 170 operates to lower the right-hand roll-gap mechanism 150 by a respective closing distance Y2, which thereby lowers the upper conditioning roll 126 back into contact with the lower conditioning roll. Movement through the respective closing distance Y2 can be determined via sensor feedback or other means. The respective closing distance Y2 may be equal to or different from the closing distance Y1 described above.

Next, in S634, the controller 170 operates the tension mechanism 140 to apply a force to bias the system towards the maximum roll tension state, and thus bias the upper conditioning roll 126 towards the lower conditioning roll 124. This again helps ensure that any slack remaining after completing step S632 is removed from the system. The biasing force in this step may reach the maximum roll tension state, but it is expected that a significantly lower force (e.g., 25% of maximum) can achieve the desired result of removing any remaining slack.

In step S636, the controller 170 again releases the tension member load, such as by venting the tension actuator 144 hydraulic cylinder to a drain tank.

In step S638, the controller 170 queries the position sensor 161 to determine the current value (e.g., electrical resistance in the case of a linear or rotary potentiometer), and sets this value as the calibrated nominal zero roll gap. If desired, a correction factor can be added to this nominal zero roll gap value to account for variables in the system.

At this point, it can be assumed that each travel stop 154 is located at the respective closing distance Y1, Y2 below the point at which it begins lifting the respective end of the upper conditioning roll 126 out of contract with the lower conditioning roll 124. Thus, the controller 170 can operate the roll-gap mechanisms 150 to accurately raise the upper conditioning roll 126 to achieve a desired roll gap RG. This control can be achieved using position sensors 163 associated with the respective roll-gap mechanisms 150. For example, in step S640, the controller 170 operates the left-hand and right-hand roll-gap mechanisms 150 to raise their travel stops 154 while monitoring the output of their respective position sensors 163. If desired, a correction factor may be included in this process to account for variables such as roller wear, compliance due to elastic conditioning roll surfaces (e.g., rubber conditioning roll surface or the like), and so on.

**In** some embodiments, the conditioning rolls 124, 126 may be operated to rotate during one or more of the steps described above which may be helpful to clear crop debris remaining between the conditioning rolls 124, 126.

The foregoing embodiment operates using feedback from a single position sensor 161 that determines movement of the tension mechanism 140 relative to the subframe 122. This arrangement is advantageous because the tension mechanism - due to its inherent resilience and position in the mechanical flow path - experiences relatively little motion during operation of the crop conditioning device. For example, with the position sensor 161 attached at the end of the spring 141a that is fixed to the tensioner linkage 145, the position, during normal operation, moves primarily only as the tension actuator 144 is repositioned by the operator or controller 170. Thus, the position sensor 161 is not subject to the high and frequent oscillation loads that other sensors might experience during normal operation. However, during calibration, the position sensor 161 can be used to accurately measure movement of the upper conditioning roll 126 by disengaging or neutralizing the tension actuator 144. Similar benefits can be obtained from attaching the position sensor between the subframe and the tensioner linkage 145 or tension actuator itself.

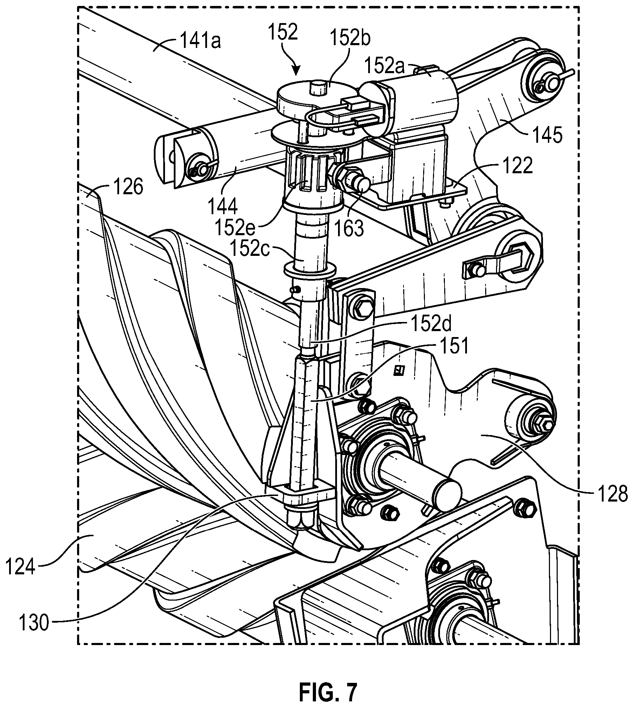

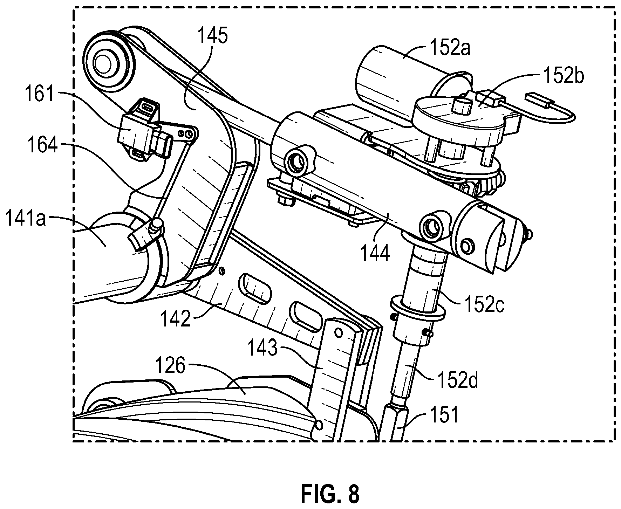

In the foregoing embodiment, the positions of the travel stops 154 are determined using their own respective position sensors 163. Such sensors preferably are robust enough to avoid being rendered ineffective during operation of the crop conditioning device 120. In some cases, a conventional sensor (e.g., potentiometer) might not be suitable, meaning that more robust and often expensive sensors must be used. Such difficulties can be avoided by incorporating the position sensors into a low-cycle component of the system. One example of this construction is shown in FIGS. 7 and 8.

FIGS. 7 and 8 show an embodiment of a crop conditioning device 120 that is provided generally in accordance with the embodiment of FIGS. 1-5, but wherein the roll-gap actuators 152 are provided in the form of electric motor roll-gap actuators152, rather than hydraulic actuators. Each electric motor roll-gap actuator 152 comprises an electric motor 152a that is operably connected to the respective control rod 151 and travel stop 154. In the shown example, each electric motor 152a is mounted to the subframe 122, and connected to the control rod 151 via a transmission 152b, which includes a rotatable output shaft 152c and a screw 152d, and any other components necessary to provide a chain of driving forces. The electric motor 152a operates to rotate the output shaft 152c. The transmission 152b may include belts, chains, gears or the like (e.g., a 90° offset drive as shown), or it may simply comprise a direct coupling (i.e., a 1:1 transmission or simply the output shaft itself 152c if the output shaft 152c is directly connected to the motor shaft). The output shaft 152c is threaded to the screw 152d, such that rotation of the output shaft 152c causes the screw 152d to move telescopically along the threads into or out from the output shaft 152c, depending on the rotation direction. The end of the screw 152d is secured to the control rod 151, and therefore movement of the screw 152d along the output shaft 152c raises and lowers the travel stop 154. In the shown example, the screw 152d has external threads that fit into matching internal threads within the output shaft 152c, but it will be understood that the screw 152d may have internal threads that fit into matching external threads on the output shaft 152c. In either case, relative rotation between the output shaft 152c and screw 152d provides a telescoping motion between the output shaft 152c and the screw 152d.

The roll-gap actuator 152 also includes a position sensor 163 in the form of a rotation sensor, such as a Hall-effect sensor, an optical encoder, or another sensor that measures rotation of the output shaft 152c, either directly or indirectly (e.g., by measuring rotation of the motor 152a). In this case, the output shaft 152c has a series of splines 152e, and the position sensor 163 is a Hall-effect sensor that detects each time a spline passes by the sensor 163. Using a known thread pitch of the screw 152d, changes in the angular orientation of the output shaft 152c can be accurately converted into linear movement of the travel stop 154. For example, the output shaft 152c may have ten splines, and the screw 152d might have a pitch of 8 threads per inch, such that a fixed ratio of eighty splines (i.e., eighty Hall-effect sensor readings) equals one inch of travel stop 154 movement.

This arrangement provides a robust position sensor 163 that is not subject to cyclical movements and loads on the upper conditioner roll 126, and also provides a high-accurate measure of travel distance. Furthermore, using a system such as this, the predetermined initial closing distance X and closing distances Y1, Y2 can be easily and repeatably measured in terms of rotations or partial rotations of the output shaft.

It will be understood that the arrangement of FIGS. 7 and 8 can be modified in various ways. For example, the rotation sensor can be integrated into the electric motor controls (e.g., as a stepper motor or the like), or it may be positioned to read rotation of other parts of the system.

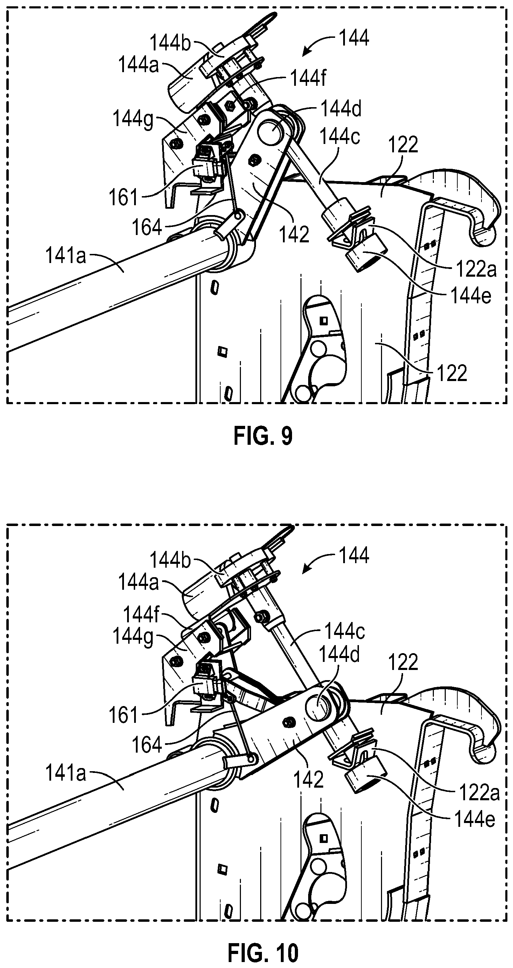

It will also be understood that embodiments may use alternative tension actuators 144, as well as alternative mechanisms for releasing the tension member load as described, for example, in step S610 above. For example, as shown in FIGS. 9 and 10, the tension actuator 144 may be provided as an electric motor tension actuator 144. Here, the electric motor tension actuator 144 comprises an electric motor 144a, a transmission 144b, a screw 144c, a follower 144d, and a travel stop 144e. The electric motor 144a is connected to the screw 144c via the transmission, which in this case is a 90° offset drive. The follower 144d is threaded to the screw 144c (e.g., via internal threads), and pivotally connected to the tensioner linkage 145. The travel stop 144e is located at the end of the screw 144c opposite the motor 144a. The screw 144c extends through the subframe 122, such as at a boss 122a, and the travel stop 144e prevents the screw 144c from being pulled through the boss 122a. The travel stop 144e may comprise, for example a thrust bearing secured to the end of the screw 144c, an enlarged end of the screw 144c, or the like.

The electric motor tension actuator 144 operates by activating the electric motor 144a to drive the screw 144c, thereby causing the follower 144d to move along the screw 144c in a direction dictated by the rotation direction of the motor 144a. Operating the motor 144a in one direction moves the follower 144d towards the travel stop 144e, thereby pulling the tensioner linkage 145 to increase the load generated by the tension mechanism 140 and increase the force biasing the upper conditioning roll 126 towards the lower conditioning roll 124. Operating the electric motor 144a in the other direction moves the follower 144d away from the travel stop 144e, thereby reducing the biasing force. The length of the screw 144c is selected such that the biasing force generated by the tension mechanism 140 can be reduced to zero. Specifically, the screw 144c may be sufficiently long that when the follower 144d reaches the end opposite the travel stop 144e, the tension mechanism 140 reaches a state in which it is not deformed to generate a biasing force, and therefore there is no load pulling the travel stop 144e against the boss 122a. Thus, the electric motor tension actuator 144 can be operated to perform steps such as S610 by moving the follower 144d to the end of the screw 144c opposite the travel stop 144e.

The electric motor tension actuator 144 may be configured such that the angular orientation between the screw 144c and the frame boss 122a changes depending on the position of the follower 144d. In this case, the motor 144a may be free to move along with the end of the screw 144c, while still being able to generate a torque load to drive the screw 144c. For example, the motor 144a may be mounted to a shuttle 144f that slides within a channel 144g that is rigidly attached to the subframe 122. The shuttle 144f allows the motor 144a to move with the screw 144c as necessary, but interaction between the shuttle 144f and channel 144g prevents the motor 144a from freely rotating, and thereby provides a reaction force between the motor 144a and the subframe 122 to drive the screw 144c.

Still other embodiments can use other mechanisms to perform the methods described herein. For example, the tension actuator 144 may be replaced by an electrically-operated linear actuator having a clutch that allows the actuator to be decoupled to reduce the tension on the upper conditioning roll 126 to zero.

Embodiments can also provide typical and conventional operations and functionality of a crop conditioning device 120. For example, the position sensor 163 can be used to determine preload on the tension member 141, and thereby be used to adjust the biasing force on the upper conditioner roll 126.

Embodiments are expected to provide significant benefits, particularly in relation to establishing the zero roll gap RG condition. For example, unlike conventional systems, some embodiments do not require the use of sensors that are subjected to high loads and oscillations during use of the crop conditioning device 120. Embodiments also can provide a relatively simple and effective way of quickly establishing the zero roll gap RG condition, and these methods can be operated during startup of the machine, or at any desirable later time.

## Claims

1. A method for determining a zero roll gap condition in an agricultural machine comprising a frame (112, 122), a first conditioning roll (124) rotatably supported on the frame (112, 122), a second conditioning roll (126) rotatably and movably supported on the frame (112, 122), a tension mechanism (140), a first roll-gap mechanism (150) at a first end of the second conditioning roll (126), a second roll-gap mechanism (150) at a second end of the second conditioning roll (126), and a position sensor (161) configured to determine a position of the tension mechanism (140) relative to the frame (112, 122), the method comprising:
(a) operating the first roll-gap mechanism (150) and the second roll-gap mechanism (150) in a gap-closing direction to move the second conditioning roll (126) towards the first conditioning roll (124) until the position sensor (161) indicates that the tension mechanism (140) has stopped moving relative to the frame (112, 122);
(b) operating the first roll-gap mechanism (150) in a gap-opening direction until the position sensor (161) indicates that the tension mechanism (140) has started moving relative to the frame (112, 122);
(c) operating the first roll-gap mechanism (150) in the gap-closing direction along a respective closing distance;
(d) operating the second roll-gap mechanism (150) in the gap-opening direction until the position sensor (161) indicates that the tension mechanism (140) has started moving relative to the frame (112, 122);
(e) operating the second roll-gap mechanism (150) in the gap-closing direction along a respective closing distance; and
(f) setting the current position of the tension mechanism (140) relative to the frame (112, 122), as measured by the position sensor (161), as a zero roll gap condition.

2. The method of claim 1, further comprising, before step (a):
operating the tension mechanism (140) to generate a force to bias the second conditioning roll (126) towards the first conditioning roll (124); and
subsequently operating the tension mechanism (140) to stop generating the force.

3. The method of claim 1 or 2, further comprising, between step (a) and step (b):
operating the first roll-gap mechanism (150) and the second roll-gap mechanism (150) in the gap-closing direction along an initial closing distance after the tension mechanism (140) stops moving relative to the frame (112, 122).

4. The method of any of the preceding claims, further comprising, between step (a) and step (b):
operating the tension mechanism (140) to generate a force to bias the second conditioning roll (126) towards the first conditioning roll (124); and
subsequently operating the tension mechanism (140) to stop generating the force.

5. The method of any of the preceding claims, further comprising, between step (e) and step (d):
operating the tension mechanism (140) to generate a force to bias the second conditioning roll (126) towards the first conditioning roll (124); and
subsequently operating the tension mechanism (140) to stop generating the force.

6. The method of any of the preceding claims, further comprising, between step (e) and step (f):
operating the tension mechanism (140) to generate a force to bias the second conditioning roll (126) towards the first conditioning roll (124); and
subsequently operating the tension mechanism (140) to stop generating the force.

7. The method of any of the preceding claims, further comprising:
before step (a):
operating the tension mechanism (140) to generate a first force to bias the second conditioning roll (126) towards the first conditioning roll (124); and
subsequently operating the tension mechanism (140) to stop generating the first force;
between step (a) and step (b):
operating the first roll-gap mechanism (150) and the second roll-gap mechanism (150) in the gap-closing direction along a predetermined initial closing distance after the tension mechanism (140) stops moving relative to the frame (112, 122);
between step (a) and step (b):
operating the tension mechanism (140) to generate a second force to bias the second conditioning roll (126) towards the first conditioning roll (124), and
subsequently operating the tension mechanism (140) to stop generating the second force;
between step (c) and step (d):
operating the tension mechanism (140) to generate a third force to bias the second conditioning roll (126) towards the first conditioning roll (124); and
subsequently operating the tension mechanism (140) to stop generating the third force;
between step (e) and step (f):
operating the tension mechanism (140) to generate a fourth force to bias the second conditioning roll (126) towards the first conditioning roll (124), and
subsequently operating the tension mechanism (140) to stop generating the fourth force.

8. The method of claim 7, wherein the tension mechanism (140) comprises a tension actuator (144), and operating the tension mechanism (140) to stop generating the first force, the second force, the third force and the fourth force comprises decoupling the tension actuator (144) from the frame (112, 122).

9. The method of claim 8, wherein the tension actuator (144) comprises a hydraulic actuator, and decoupling the tension actuator (144) from the frame (112, 122) comprises venting the hydraulic actuator to a drain (182).

10. The method of claim 8, wherein the tension actuator (144) comprises a screw (144c), a follower (144d) threaded to the screw (144c), a travel stop (144e) secured to an end of the screw (144c), and a frame boss (122a) through which the screw (144c) passes between the follower (144d) and the travel stop (144e), and wherein decoupling the tension actuator (144) from the frame (112, 122) comprises moving the follower (144d) along the screw (144c) away from the travel stop (144e) until the travel stop (144e) does not generate a load against the frame boss (122a).

11. The method of any of the preceding claims, wherein each of the first roll-gap mechanism (150) and the second roll-gap mechanism (150) comprises a hydraulic actuator (152) operatively connected to the respective end of the second conditioning roll (126) by a floating connection (130, 151, 154).

12. The method of any of claims 1-10, wherein each of the first roll-gap mechanism (150) and the second roll-gap mechanism (150) comprises an electric motor (152a) operatively connected to the respective end of the second conditioning roll (126) by an output shaft (152c) and a screw (152d) configured to move telescopically relative to each other upon relative rotation between the output shaft (152c) and the screw (152d), and wherein the position sensor (161) comprises a rotation sensor configured to determine a rotation of the output shaft (152c).

13. An agricultural machine comprising:
a frame (112, 122);
a first conditioning roll (124) rotatably supported on the frame (112, 122);
a second conditioning roll (126) rotatably and movably supported on the frame (112, 122);
a tension mechanism (140);
a first roll-gap mechanism (150) at a first end of the second conditioning roll (126);
a second roll-gap mechanism (150) at a second end of the second conditioning roll (126);
a position sensor (161) configured to determine a position of the tension mechanism (140) relative to the frame (112, 122); and
a controller (170) operatively connected to the tension mechanism (140), the first roll-gap mechanism (150), the second roll-gap mechanism (150) and the position sensor (161), wherein the controller (170) comprises a processor and a memory (172) storing non-transient computer executable instructions, and wherein the controller (170) is operative, upon reading and executing the instructions, to perform the method according to any of claims 1-12.

14. A computer readable medium storing non-transient computer executable instructions that, when executed by a computer, perform the method according to any of claims 1-12.
